# EUROPÄISCHE PATENTSCHRIFT

(11) **EP 1 236 406 B1**
(45) Veröffentlichungstag und Bekanntmachung des Hinweises auf die Patenterteilung: **18.08.2004**
(21) Anmeldenummer: 02386004.2
(22) Anmeldetag: 22.02.2002
(51) Int. Cl.: A23K 3/03, A23K 1/18

(54) **Komplettes durch Silierung hergestelltes Mischfutter**
Complete ensiled mixed fodder
Fourrage mixte complet, produit par ensilage

(30) Priorität: 02.03.2001 GR 2001100103
(43) Veröffentlichungstag der Anmeldung: 04.09.2002
(73) Patentinhaber: Protipi Viotechnia Tipopiimenou Ensiromatos Bioproten S.A., 600 62 Korinos Pierias (GR)
(72) Erfinder: Triftaridis, Nikolaos, 600 62 Korinos Pierias (GR)

(56) Entgegenhaltungen:
- EP-A- 0 082 366
- EP-A- 0 113 384
- FR-A- 2 608 377
- FR-A- 2 610 483
- GB-A- 1 010 972
- DERBYSHIRE J C: "COMPLETE CORN SILAGE RATION FOR MILKING COWS" JOURNAL OF DAIRY SCIENCE, AMERICAN DAIRY SCIENCE ASSOCIATION. CHAMPAIGN, ILLINOIS, US, Bd. 51, Nr. 7, 1968, Seiten 1097-1100, XP002066987 ISSN: 0022-0302
- DATABASE WPI Section Ch, Week 199445 Derwent Publications Ltd., London, GB; Class D13, AN 1994-365181 XP002202255 & SU 1 825 614 A (BASHKIR RANCHES FEEDSTUFFS RES DES INST), 7. Juli 1993 (1993-07-07)
- DATABASE WPI Section Ch, Week 198917 Derwent Publications Ltd., London, GB; Class D13, AN 1989-124597 XP002202256 & HU 47 407 A (AGRAR KUTATO FEJLESZTO KOEZOES), 28. März 1989 (1989-03-28)
- DATABASE WPI Section Ch, Week 197516 Derwent Publications Ltd., London, GB; Class C03, AN 1975-26867W XP002202257 & SU 422 405 A (MICROBIO VIRUS AS KAZAKH), 14. November 1974 (1974-11-14)
- DATABASE WPI Section Ch, Week 197622 Derwent Publications Ltd., London, GB; Class C03, AN 1976-41099X XP002202258 & JP 51 045068 A (ZENKOKU KOGYO KYODO), 17. April 1976 (1976-04-17)

## Beschreibung

Die Erfindung betrifft ein komplettes Mischfutter, das mit der Silierungsmethode hergestellt wird und den Nährmittelbedarf von Vieh, und insbesondere von Wiederkäuern, deckt.

Bei der Silierung handelt es sich um eine Konservierungsmethode, mit deren Hilfe das Futter mit ausreichend Feuchtigkeit (45-60%), so daß die Gärung in Gang kommt, in luftdichten Silos gelagert wird. Der gesamte Prozeß dauert zwei bis drei Wochen. Während dieser Zeitspanne laufen zwei Prozesse, ein aerober und ein anaerober, ab. Bei dem aeroben Prozeß verbrauchen die lebenden Zellen der Pflanze (vor allem Mais) den im Silo eingeschlossenen Sauerstoff, wobei Kohlendioxid und Wasser entstehen unter gleichzeitiger Freisetzung von Energie oder Wärme. Gleichzeitig gedeihen aerobe Hefe und Schimmel und vermehren sich. Während des anaeroben Prozesses, wenn der im Silo befindliche Sauerstoff verbraucht ist, vermehren sich auf erstaunliche Weise anaerobe Bakterien, an erster Stelle Säurebakterien und Proteolyten. Zu gleicher Zeit wirken Hefe und Schimmel wie ein Enzymmechanismus, der Alkohol und andere Endprodukte hervorbringt. So werden die kohlehydrathaltigen Bestandteile und der Zucker in Milchsäure, Essigsäure sowie in kleinere Mengen anderer saurer und alkoholhaltiger Bestandteile aufgespalten; kleine Proteinmengen spalten sich in Ammoniak, Aminosäure und Amine auf, während der Säuregehalt einen solchen Grad erreicht, daß die Bakterien absterben und damit die Silierung abgeschlossen wird. Kennzeichnend für das Silageverfahren ist, daß der Ph-Wert des Produktes bei 3,5 bis 4,5 liegt, was auch der Schlüssel für ein gut konserviertes Silagefutter ist, denn dieser Wert läßt die Entwicklung von Bakterien nicht zu; außerdem werden durch das Verfahren Mikroorganismen neutralisiert. So bleibt ein größerer Anteil des Nährwertes der Pflanze bewahrt, und das auf diese Weise hergestellte Futter, die Silage (Grobfutter), ist eine bessere Protein- und Vitaminquelle als das Trockenfutter.

Trotz ihrer Vorteile hat die Silage doch den Nachteil, daß es sich nicht um eine Vollnahrung (voller Tagesbedarf) handelt, so daß der Viehzüchter sich gezwungen sieht, an die Tiere als Ergänzung noch weitere Futtermittel zu verfüttern, deren hygienische Qualität häufig nicht testiert ist.

Beispielsweise ist für die komplette Ernährung einer Kuh, die ein Gewicht von 550 kg hat und 30 I Milch mit einem Fettgehalt von 4% täglich erzeugt, 4,5% Futter je 100 kg Lebendgewicht erforderlich, d.h. hier 24,75 kg Futter (550 x 4,5%). Dies muß laut "Feeds and nutrition complete" von M.E. Ensminger & C. G. Olentine Jr. konkret folgende Bestandteile enthalten:
- Trockensubstanz: 2-3% des Gewichts, d.h. 550 kg x 3% = 16,5 kg
- Proteine: 691 g (zur Erhaltung) + 2.340 g (= 78 g/kg x 30 kg für die Milcherzeugung) = 3.031 g.
- N.E.L. Reine Milcherzeugungsenergie: 9,6 MCal (zur Erhaltung) + 22,2 MCal (für Milcherzeugung) = 31,8 MCal.
Außerdem liegt der Bedarf des Tieres an Faserstoffen (Zellulose), um das Wiederkäuen zu ermöglichen, bei 18-20% der Trockensubstanz, d.h. es sind 16,5 kg x 18% = 2,97 kg je Tier täglich erforderlich.

Die Silage enthält jedoch:
- Trockensubstanz: 30-50% (50% x 24,75 kg = 12,375 kg)
- Proteine: 32 g/kg (32 x 24,75 kg = 792 g)
- N.E.L.: 0,68 MCal/ kg (0,68 x 24,75 kg = 16,83 Mcal)
- Zellulose: 9,8% (9,8% x 24,75 kg = 2,42 kg).
Anders gesagt, erfüllt die Silage trotz ihrer Vorteile nicht die Richtwerte der obigen Aufstellung für die vollständige Ernährung eines Tieres, und aufschlußreich ist, daß für die Deckung des Proteinbedarfs eines Tieres dieses 94,71 (3.031 : 32) Kilo Nahrung verzehren müßte, was unannehmbar und unmöglich ist.

Dieser schwerwiegende Nachteil der Silage führt dazu, daß die Fütterung der Wiederkäuer weiterhin in der Mehrzahl der Fälle nach der alten, traditionellen Methode vor sich geht, wobei das Grobfutter, wie es die Silage ist, getrennt gegeben wird und ebenfalls getrennt das ergänzende, konzentrierte Futter (Abfallerzeugnisse), das bekanntlich ca. 12-13% Feuchtigkeit enthält, denn andernfalls wäre dessen Konservierung unmöglich, und es würden sich Mikroorganismen entwickeln, die das Futter verderben und die Gesundheit der Tiere gefährden.

Die Herstellung von Silagefuttermittel ist beispielsweise in der EP-A-0113384 beschrieben.

Die Erfindung betrifft ein futtermittel auf der Grundlage von Silage erhältlich dadurch, dass die Silage, welche beispielsweise vorwiegend aus Mais besteht, nach der anfänglichen Gärung mit einer Konzentratmischung vermischt wird, welche Proteine wie z.B. Soja oder Sonnenblumenmehl, Zellulose wie z.B. Mais, Vitamine, Spurenelemente und Mineralstoffe wie z.B Calcium oder Phosphor enthält, wobei sich das Verhältnis der Bestandteile Silage und Konzentratmischung nach dem Nahrungsbedarf des Tieres richtet, die erhaltene Mischung luftdicht verpackt wird und anschliessend die Gärung erneut für den Zeitraum einer Woche in Gang gesetzt wird.

Die Erfindung, um die es hier geht, betrifft die Herstellung eines kompletten Mischfutters auf der Grundlage der Silage (voller Tagesbedarf) zur Deckung der Ernährungsbedürfnisse vor allem der Wiederkäuer (Rinder, Schafe und Ziegen), ohne daß zusätzliches Futter gegeben werden muß.

Dies wird wie folgt bewerkstelligt: Nach Abschluß der anfänglichen Gärung (Silierung) wird die Silage auf ihre Feuchtigkeit kontrolliert, analysiert und dann in eigens angefertigte Mischgeräte eingefüllt, wo sie ergänzt wird durch eine besondere Mischung (Konzentrat), damit sie angereichert wird, was die Energie (Mais) und die Proteine (Soja) angeht; dabei handelt es ich um folgende Rohstoffe:
- Proteinhaltige, wie Soja, Sonnenblumenmehl usw.
- Zellulosehaltige
- Vitamine
- Spurenelemente
- Mineralstoffe, wie Calzium, Phosphor usw.
Die obigen Bestandteile (Silage-Grobfutter und Konzentrate) werden in unterschiedlichen Verhältnis je nach den Nahrungsbedürfnissen der Tiere in Maschinen besonderer Technologie und unter der Aufsicht eines Tierarztes gemischt. Danach werden sie luftdicht verpackt, und in der Verpackung kommt die ursprüngliche Gärung wieder in Gang und dauert eine weitere Woche. Durch die zweite Gärung wird die Aufspaltung der Proteine und Kohlenhydrate bewirkt, wodurch ein Teil der Verdauung der Tiere ersetzt wird, so daß die für das Wiederkäuen erforderliche Energie um ca. 30-50% verringert wird. Diese Energieeinsparung drückt sich in mehr Milch und Fleisch aus.

Die Mischung, die mit Hilfe des obigen Verfahrens gewonnen wird und die, wie erwähnt in luftdichten Säcken verpackt, mindestens zwei Jahre haltbar ist, verbindet alle Vorteile der Silage, ohne deren Nachteile aufzuweisen, denn ihre Anreicherung mit protein- und zellulosehaltigen Nährstoffen sowie mit Nährstoffen von hohem Energiewert und außerdem mit den notwendigen Vitaminen, Spurenelementen, Phosphor, Calzium usw. ergibt ein komplettes Tierfuttermittel, das den ganzen Tagesbedarf der großen und kleinen Wiederkäuer deckt.

Die Erfindung wird durch das folgende Beispiel veranschaulicht, das sich auf den Nahrungsbedarf einer Kuh mit einem Lebendgewicht von 550 kg und einer Milchproduktion von 30 kg täglich bezieht:

Bei Abschluß der anfänglichen Gärung (Silierung) erhält man eine Maissilage mit 30-50% Feuchtigkeit, während die Feuchtigkeit in Bezug auf die Substanzen, mit denen sie angereichert wird, mit 47,33% gemessen wird; es folgt die Analyse und dann wird die Silage in eigens hergestellte Mischwerke gefüllt, wo sie ergänzt wird mit 19,22% Trockenmais, 11,15% Sojamehl, 19,9% Baumwollkuchen, 0,10% Vitaminen und Spurenelementen - darunter A 12.000 IU, D3 2.000 IU, E 30 mg - 50 mg Mangan, 50 mg Eisen, 40 mg Quecksilber, 6 mg Kupfer, 10 mg Kobalt, 125 mg Magnesium, 10 mg Selen, 2,90% Marmorpulver, 0,7% Dicalciumphosphat und 1% Salz. Danach werden die obigen Bestandteile (Silage-Grobfutter und Konzentrate) luftdicht verpackt, und in der Verpackung wird die anfängliche Gärung erneut in Gang gesetzt, und zwar für eine weitere Woche. In der luftdichten Verpackung ist die Mischung zwei Jahre lang haltbar.

Demzufolge haben wir nach dem obigen Verfahren ein Endprodukt, das aus 70% Trockensubstanz (die restlichen 30% sind Feuchtigkeit), 14% Proteinen, 12 % Zellulose und 1,35% N.E.L. reine Milchproduktionsenergie, 1,30% Calcium und 0,5% Phosphor besteht. Da, wie zuvor erklärt, das Tier 4,5% Futter je 100 kg Lebendgewicht benötigt, d.h. bei unserem Beispiel einer Kuh mit 550 kg Gewicht (550 x 4,5% =) 24,75 kg, setzt sich unsere Erfindung, ein komplettes durch Silierung gewonnenes Mischfutter, zusammen aus:
- Trockensubstanz: 70% x 24,75 kg = 17,32 kg
- Proteine: 14% x 24,75 kg = 3,465 kg oder 3.465 g
- N.E.L.: 1,35 MCal/kg x 24,75 kg = 33,41 Mcal
- Zellulose: 12% x 24,75 kg = 2,97 kg.

Folglich erfüllt die Erfindung sämtliche internationalen Richtlinien für Vollfutter, denn es handelt sich um ein komplettes durch Silierung hergestelltes Mischfutter (voller Tagesbedarf).

## Patentansprüche

1. Futtermittel auf der Grundlage von Silage erhältlich dadurch, dass die Silage, welche beispielsweise vorwiegend aus Mais besteht, nach der anfänglichen Gärung mit .einer Konzentratmischung vermischt wird, welche Proteine wie z.B. Soja oder Sonnenblumenmehl, Zellulose wie z.B. Mais, Vitamine, Spurenelemente und Mineralstoffe wie z.B Calcium oder Phosphor enthält, wobei sich das Verhältnis der Bestandteile Silage und Konzentratmischung nach dem Nahrungsbedarf des Tieres richtet, die erhaltene Mischung luftdicht verpackt wird und anschliessend die Gärung erneut für den Zeitraum einer Woche in Gang gesetzt wird.

## Claims

1. A silage-based animal foodstuff produced from silage consisting mainly of maize for example, which, following the initial fermentation, is mixed with a concentrate containing proteins such as soya or sunflower seed flour; cellulose, such as maize; vitamins; trace elements and minerals, such as calcium or phosphorus. The ratio of silage and concentrate is determined according to the dietary requirements of the animals. The resulting mixture is packed in airtight packaging and ultimately allowed to ferment again for a period of one week.

## Revendications

1. Aliment pour bétail obtenu à partir de fourrage ensilé. Le fourrage, constitué par exemple principalement de maïs est mélangé, après sa fermentation initiale, avec une solution concentrée contenant des protéines, comme par exemple du soja ou de la farine de tournesol, de la cellulose comme par exemple du maïs, des vitamines, des oligo-éléments ainsi que des sels minéraux, comme par exemple du calcium ou du phosphore. Pendant ce processus, la proportion des ingrédients du fourrage et de la solution concentrée est calculée sur la base des besoins alimentaires de l'animal. Le produit final est conditionné sous emballage hermétique et la fermentation est relancée pour une semaine.
